# EUROPEAN PATENT APPLICATION

(11) **EP 3 045 311 A1**
(43) Date of publication of application: **20.07.2016**
(21) Application number: 14844956.4
(22) Date of filing: 04.09.2014
(51) Int. Cl.: B32B 25/10, D04H 1/4374, D04H 3/16

(54) **STRETCHABLE MEMBER AND ARTICLE INCLUDING SAME**

(30) Priority: 12.09.2013 JP 2013189562; 25.08.2014 JP 2014170398
(71) Applicant: Nitto Denko Corporation, Ibaraki-shi, Osaka 567-8680 (JP)
(72) Inventor: ARAKAWA, Masaaki, Ibaraki-shi Osaka 567-8680 (JP)
(74) Representative: Müller-Boré & Partner Patentanwälte PartG mbB
(86) International application number: PCT/JP2014/073310
(87) International publication number: WO 2015/037507

(57) **Abstract**

Provided is a stretchable material that has excellent stretchability, has satisfactory air permeability, is free from causing the protrusion of an elastomer layer and a burr thereof, and is reduced in production cost. Also provided is an article including such stretchable material. A stretchable material of the present invention includes an elastomer layer having an air-permeable portion.

## Description

### Technical Field

The present invention relates to a stretchable material and an article including the stretchable material.

### Background Art

Various stretchable laminates are proposed for articles such as sanitary materials,for example,diapersand masks. A stretchable laminate formed of a laminate of an elastomer layer and a nonwoven fabric layer has been reported as any such stretchable laminate (see, for example, Patent Literatures 1 and 2). Further, anelastomer layer (an elastomer film or the like) having stretchability has been used in the periphery of the waist opening portion of a disposable diaper or in the periphery of a leg opening portion thereof for improving its fittability to a wearer.

An elastomer layer in a conventional stretchable laminate is a nonporous film and hence has poor air permeability. Accordingly, when the laminate is applied to an article, e. g. , a sanitary material, such as a diaper or a mask, a problem, such as a skin rash, occurs owing to the poor air permeability.

A possible approach to securing air permeability in the elastomer layer in the conventional stretchable laminate is to separately form an air hole in the elastomer layer through piercing.

However, when the elastomer layer is subj ected to the piercing, the following problems occur at the time of the piercing. The elastomer layer protrudes, or a burr or a piercing scrap occurs. When the stretchable laminate causing those problems is applied to an article, e.g., a sanitary material, such as a diaper or a mask, there occurs a problem in that a skin is damaged by, for example, a flare or a rash due to contact with the layer, the burr, or the scrap.

Further, when the elastomer layer is subjected to the piercing, there occurs a problem in that a total production cost for the stretchable laminate increases owing to an increase in cost and a reduction in yield due to the piercing.

### Citation List

### Patent Literature

[PTL 1] JP 2012-187857 A
[PTL 2] JP 3830818 B2

### Summary of Invention

### Technical Problem

The present invention has been made to solve the problems of the related art, and an object of the present invention is to provide a stretchable material that has excellent stretchability, has satisfactory air permeability, is free from causing the protrusion of an elastomer layer and a burr thereof, and is reduced in production cost. Another object of the present invention is to provide an article including such stretchable material.

### Solution to Problem

A stretchable material according to one embodiment of the present invention includes an elastomer layer having an air-permeable portion.

In a preferred embodiment, the stretchable material further includes a nonwoven fabric layer on at least one side of the elastomer layer.

In a preferred embodiment, the air-permeable portion is free from being a hole formed by piercing.

In a preferred embodiment, the elastomer layer includes at least one kind selected from a fiber assembly-like elastomer layer, a network elastomer layer, a stripe-like elastomer layer, and an elastomer layer formed of a continuous pattern of a letter or a design.

In a preferred embodiment, the elastomer layer is formed by at least one kind of application selected from fibrous application, intermittent application, pattern-type application, and streaky application.

In a preferred embodiment, the elastomer layer contains at least one kind selected from an olefin-based elastomer and a styrene-based elastomer.

An article according to another embodiment of the present invention includes the stretchable material according to the one embodiment of the present invention.

### Advantageous Effects of Invention

According to the one embodiment of the present invention, the stretchable material that has excellent stretchability, has satisfactory air permeability, is free from causing the protrusion of an elastomer layer and a burr thereof, and is reduced in production cost can be provided. According to the another embodiment of the present invention, the article including such stretchable material can be provided.

### Brief Description of Drawings

FIG. **1** is a schematic cross-sectional view of a stretchable material according to a preferred embodiment of the present invention.
FIG. **2** is a schematic view for illustrating another stretchable material according to a preferred embodiment of the present invention.
FIG. **3** is a schematic view of a fiber assembly-like elastomer layer when viewed from a surface side.
FIG. **4** is a schematic view of a grid-like elastomer layer when viewed from a surface side.
FIG. **5** is a schematic view of another grid-like elastomer layer when viewed from a surface side.
FIG. **6** is a schematic view of a ring-like elastomer layer when viewed from a surface side.
FIG. **7** is a schematic view of a stripe-like elastomer layer in which stripes of an elastomer resin are formed in a CD direction when viewed from a surface side.
FIG. **8** is a schematic view of a stripe-like elastomer layer in which stripes of an elastomer resin are formed in a MD direction when viewed from a surface side.
FIG. **9** is a schematic view of an elastomer layer having a letter in a continuous pattern when viewed from a surface side.
FIG. **10** is a schematic view of an elastomer layer having a honeycomb-like design in a continuous pattern when viewed from a surface side.
FIG. **11** is a schematic view of an elastomer layer having a design based on a specific drawing in a continuous pattern when viewed from a surface side.

### Description of Embodiments

### <<<<Stretchable Material>>>>

A stretchable material of the present invention includes an elastomer layer having an air-permeable portion. The stretchable material of the present invention may be formed only of the elastomer layer having the air-permeable portion, or may include any other appropriate layer. The number of such other appropriate layers may be only one, or may be two or more. It should be noted that when the stretchable material of the present invention includes a plurality of layers, the material may be referred to as "stretchable laminate."

In the stretchable material of the present invention, the elastomer layer may have a nonwoven fabric layer on at least one side thereof.

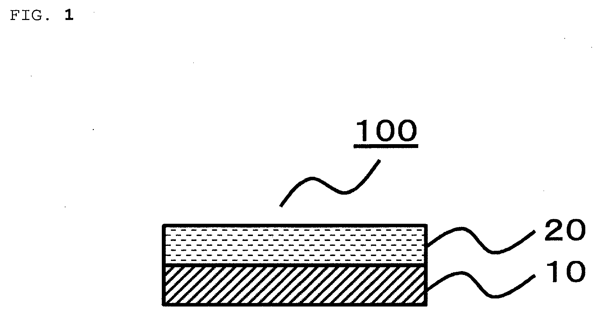

FIG. **1** is a schematic cross-sectional view of a stretchable material (stretchable laminate) according to a preferred embodiment of the present invention. A stretchable material **100** illustrated in FIG. **1** includes an elastomer layer **10** and a nonwoven fabric layer **20** arranged on only one side of the elastomer layer **10.** A material for bonding the elastomer layer **10** and the nonwoven fabric layer **20** may be present therebetween. Examples of such material include an adhesive, a pressure-sensitive adhesive, and a hot-melt pressure-sensitive adhesive.

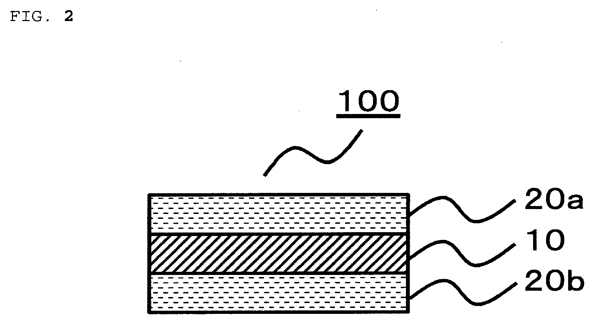

FIG. **2** is a schematic cross-sectional view of another stretchable material (stretchable laminate) according to a preferred embodiment of the present invention. A stretchable material **100** illustrated in FIG. **2** includes an elastomer layer **10,** a nonwoven fabric layer **20a** arranged on one side of the elastomer layer **10,** and a nonwoven fabric layer **20b** arranged on the elastomer layer **10** on an opposite side to the nonwoven fabric layer **20a.** A material for bonding the elastomer layer **10** and the nonwoven fabric layer **20a** and/or for bonding the elastomer layer **10** and the nonwoven fabric layer **20b** may be present therebetween. Examples of such material include an adhesive, a pressure-sensitive adhesive, and a hot-melt pressure-sensitive adhesive.

The thickness of the stretchable material of the present invention depends on the thickness of the elastomer layer and the thickness of the nonwoven fabric layer. However, for example, when a bellows-like nonwoven fabric having large unevenness is used on each of both sides of the material, the thickness is preferably 15 mm or less, and when a bellows-like nonwoven fabric having unevenness that is not very large is used on each of both sides thereof, the thickness is preferably 12 mm or less. Further, when a bellows-like nonwoven fabric having small unevenness to which moderate texture and moderate compactness have been added is used on each of both sides thereof, the thickness is preferably 10 mm or less, when a nonwoven fabric free of unevenness is used on each of both sides thereof, the thickness is preferably 3 mm or less, and when a nonwoven fabric free of unevenness to which moderate texture and moderate compactness have been added is used on each of both sides thereof, the thickness is preferably 2 mm or less. In addition, when an extremely thin nonwoven fabric free of unevenness is used on one side thereof, the thickness is preferably 0.2 mm or less, and when a nonwoven fabric that is not extremely thin but thin is used on one side thereof, the thickness is preferably 0.3 mm or less. Further, when the stretchable material of the present invention is formed only of the elastomer layer, in the case of, for example, fibrous application, the thickness is preferably 3 mm or less because some degree of bulkiness is needed for realizing stretchability. On the other hand, when an overlap is present like a network or grid-like elastomer layer, the thickness is preferably 2 mm or less. When no overlap is present, the thickness is preferably 1 mm or less. It should be noted that a lower limit for the thickness of the stretchable material is about 0.02 mm in terms of balance with its strength. It should be noted that when the thickness of the stretchable material of the present invention falls within such various ranges, the material can be appropriately used as a material to be used in an article, e.g. , a sanitary material, such as a diaper or a mask, in accordance with the applications and use sites of the material.

### «Elastomer Layer»

The elastomer layer contains any appropriate elastomer resin as a main component to the extent that the effects of the present invention are not impaired. The number of kinds of the elastomer resins may be only one, or may be two or more.

The content of the elastomer resin serving as the main component in the elastomer layer is preferably from 50 wt% to 100 wt%, more preferably from 70 wt% to 100 wt%, still more preferably from 90 wt% to 100 wt%, particularly preferably from 95 wt% to 100 wt%, most preferably from 98 wt% to 100 wt%. When the content of the elastomer resin serving as the main component in the elastomer layer falls within the range, the elastomer layer can express a sufficient elastomeric characteristic.

In addition to the elastomer resin serving as the main component, a softening component may be incorporated into the elastomer layer for, for example, adjusting its viscosity. The content of such softening component in the elastomer layer is preferably from 0 wt% to 50 wt%, more preferably from 0 wt% to 30 wt%, still more preferably from 0 wt% to 10 wt%, particularly preferably from 0 wt% to 5 wt%, most preferably from 0 wt% to 2 wt%.

The number of the elastomer layers may be one, or may be two or more.

The elastomer layer has the air-permeable portion. The air-permeable portion is a portion allowing air to permeate therethrough, and any appropriate shape may be adopted as the shape of the air-permeable portion to the extent that the effects of the present invention are not impaired. Any appropriate size may be adopted as the size of the air-permeable portion to the extent that the effects of the present invention are not impaired.

It is preferred that the air-permeable portion be not a hole formed by piercing. When the air-permeable portion is a hole formed by the piercing, the following problems may occur at the time of the piercing: the elastomer layer protrudes, or a burr or a piercing scrap occurs. In addition, when a stretchablematerial causing those problems is applied to an article, e.g. , a sanitary material, such as a diaper or a mask, there may occur a problem in that a skin is damaged by a flare or a rash due to contact with the layer, the burr, or the scrap. Further, when the elastomer layer is subjected to the piercing, a total production cost for the stretchable material may increase owing to an increase in cost and a reduction in yield due to the piercing.

The elastomer layer having such air-permeable portion as described above is specifically, for example, at least one kind selected from a fiber assembly-like elastomer layer, a network elastomer layer, a stripe-like elastomer layer, and an elastomer layer formed of a continuous pattern of a letter or a design. Stretchability in the stretchable material of the present invention can be appropriately controlled in accordance with the shape of the elastomer layer having the air-permeable portion.

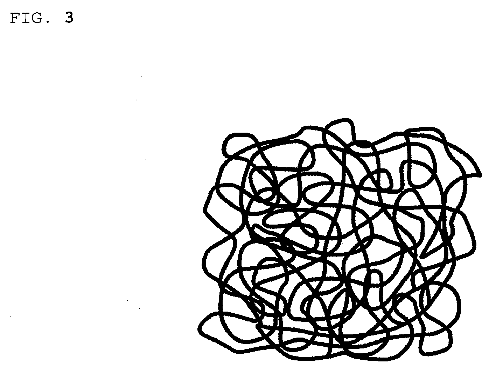

The fiber assembly-like elastomer layer is a layer built from an assembly of a fibrous elastomer resin. Such fiber assembly-like elastomer layer is, for example, a layer (FIG. **3****)** formed by randomly entangling one or more fibrous elastomer resins. As illustrated in FIG. **3****,** the fiber assembly-like elastomer layer has an air-permeable portion formed by the entanglement of the fibrous elastomer resins. Such fiber assembly-like elastomer layer is, for example, a fabric-like elastomer layer. It should be noted that the number of kinds of the fibrous elastomer resins constituting the fiber assembly-like elastomer layer may be only one, or may be two or more. In addition, the fiber diameter of each of the fibrous elastomer resins is preferably from 1 µm to 500 µm, more preferably from 5 µm to 250 µm, still more preferably from 10 µm to 150 µm.

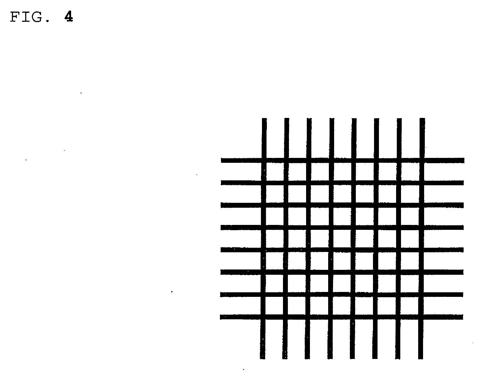

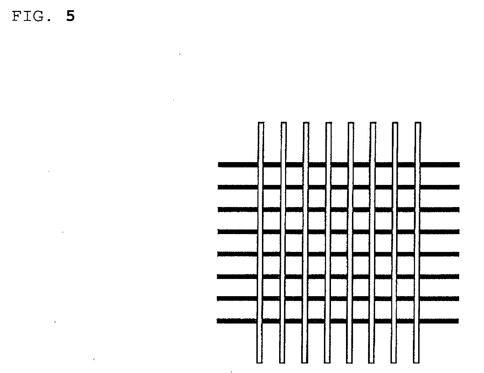

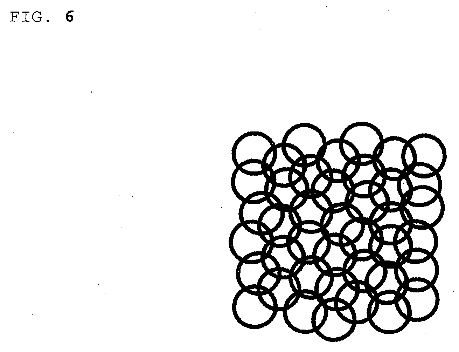

The network elastomer layer is a layer constituted of a network elastomer resin. Examples of such network elastomer layer include: a grid-like elastomer layer (FIG. **4****)** constituted of one kind of grid-like elastomer resin; a grid-like elastomer layer (FIG. **5****)** constituted of an elastomer resin in a MD direction and an elastomer resin in a CD direction different in kind from that in the MD direction; and a ring-like elastomer layer (FIG. **6****)** constituted of ring-like elastomer resins that partially overlap each other. The examples further include a network elastomer layer in which the shape of a network forms a web shape. As illustrated in FIG. **4****,** FIG. **5****,** or FIG. **6****,** the network elastomer layer has an air-permeable portion formed by a network shape. It should be noted that the number of kinds of the network elastomer resins constituting the network elastomer layer may be only one, or may be two or more. It should be noted that in the case of the grid-like elastomer layer constituted of the elastomer resin in the MD direction and the elastomer resin in the CD direction different in kind from that in the MD direction, its stretchability in the MD direction can be made different from that in the CD direction, or the layer can be formed so as to largely stretch in one of the MD direction and the CD direction.

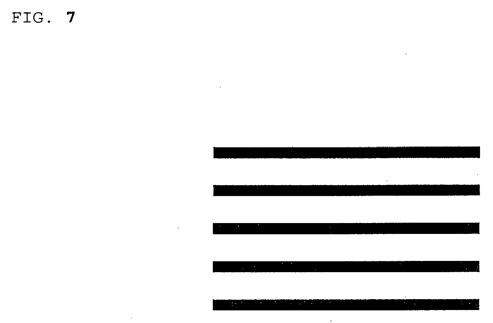

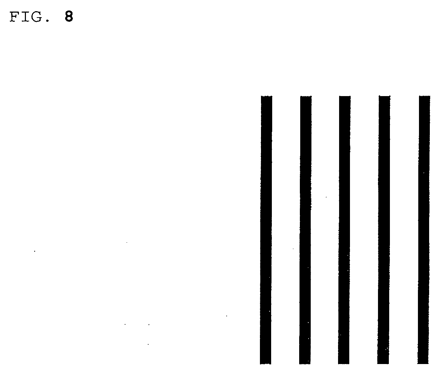

The stripe-like elastomer layer is a layer constituted of a stripe-like elastomer resin. Examples of such stripe-like elastomer layer include: a stripe-like elastomer layer (FIG. **7****)** in which stripes of an elastomer resin are formed in the CD direction; and a stripe-like elastomer layer (FIG. **8****)** in which the stripes of the elastomer resin are formed in the MD direction. The shape of each of the stripes may be such a linear shape as illustrated in FIG. **7** or FIG. **8****,** or may be any other curved shape, such as a wavy line shape. As illustrated in FIG. **7** or FIG. **8****,** the stripe-like elastomer layer has an air-permeable portion between the stripes. It should be noted that the number of kinds of the stripe-like elastomer resins constituting the stripe-like elastomer layer may be only one, or may be two or more.

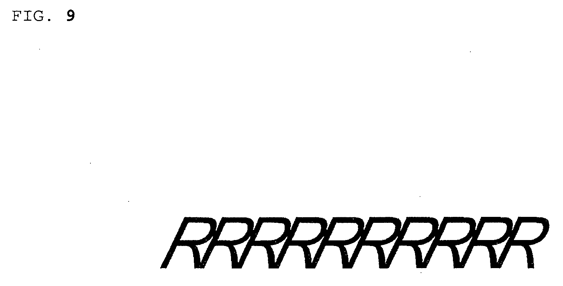

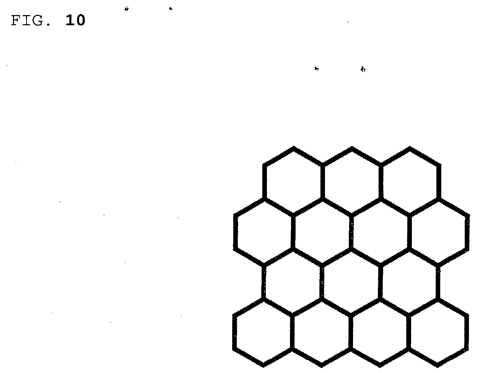

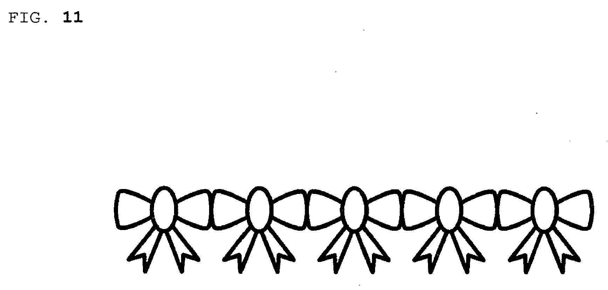

The elastomer layer formed of the continuous pattern of the letter or the design is a layer constituted of an elastomer resin forming a continuous pattern of a letter or a design. Examples of such elastomer layer formed of the continuous pattern of the letter or the design include: an elastomer layer (FIG. **9****)** having a letter in a continuous pattern; an elastomer layer (FIG. **10****)** having a honeycomb-like design in a continuous pattern; and an elastomer layer (FIG. **11****)** having a design based on a specific drawing in a continuous pattern. As illustrated in FIG. **9****,** FIG. **10****,** or FIG. **11****,** the elastomer layer formed of the continuous pattern of the letter or the design has an air-permeable portion. It should be noted that the number of kinds of the elastomer resins constituting the elastomer layer formed of the continuous pattern of the letter or the design may be only one, or may be two or more. When such elastomer layer formed of the continuous pattern of the letter or the design is adopted, the letters of various brands or the designs of various characters can be incorporated, and a design property can be imparted to the stretchable material of the present invention.

Any appropriate size may be adopted as the size of the air-permeable portion so that the effects of the present invention can be sufficiently expressed by the shape of the elastomer layer. When the air-permeable portion is excessively small, the layer may be unable to sufficiently secure air permeability, and when the air-permeable portion is excessively large, the layer may be unable to sufficiently express the stretchability.

When the elastomer layer is the fiber assembly-like elastomer layer, the length of the largest portion of the air-permeable portion is preferably from 0.01 mm to 50 mm, more preferably from 0.05 mm to 30 mm, still more preferably from 0.1 mm to 10 mm, particularly preferably from 0.5 mm to 5 mm.

When the elastomer layer is the network elastomer layer, the length of the largest portion of the air-permeable portion is preferably from 0.1 mm to 100 mm, more preferably from 0.5 mm to 50 mm, still more preferably from 1 mm to 30 mm, particularly preferably from 3 mm to 20 mm.

When the elastomer layer is the stripe-like elastomer layer, the length of the largest portion (air-permeable portion) of the intervals of adjacent stripes is preferably from 0.1 mm to 100 mm, more preferably from 0.3 mm to 50 mm, still more preferably from 0.5 mm to 30 mm, particularly preferably from 1 mm to 10 mm.

When the elastomer layer is the elastomer layer formed of the continuous pattern of the letter or the design, the length of the largest portion of the air-permeable portion is preferably from 0.1 mm to 100 mm, more preferably from 0.5 mm to 50 mm, still more preferably from 1 mm to 30 mm, particularly preferably from 3 mm to 20 mm.

The elastomer layer may be formed by any appropriate method in accordance with its shape. The elastomer layer may be, for example, a layer formed by at least one kind of application selected from fibrous application (such as spray-type application), intermittent application, pattern-type application, and streaky application. Examples of the fibrous application include meltblown application (such as curtain spraying application) and spiral application (such as spiral spraying application). The stretchability in the stretchable material of the present invention can be appropriately controlled in accordance with a method of forming the elastomer layer having the air-permeable portion.

The elastomer layer may be formed by direct application onto the surface of the nonwoven fabric layer, or the elastomer layer that has been separately formed may be transferred onto the nonwoven fabric layer.

In the present invention, the elastomer resin serving as the main component in the elastomer layer is preferably at least one kind selected from an olefin-based elastomer and a styrene-based elastomer. When the elastomer resin is at least one kind selected from the olefin-based elastomer and the styrene-based elastomer, the stretchable material of the present invention can express more excellent stretchability. In addition, the stretchability in the stretchable material of the present invention can be appropriately controlled in accordance with the elastomer resin to be selected.

The adoption of the olefin-based elastomer as the elastomer resin improves the thermal stability of the stretchable material, and hence, for example, the adoption can suppress heat deterioration at the time of film formation in the production of the stretchable material of the present invention. In addition, the adoption of the olefin-based elastomer as the elastomer resin improves the storage stability of the material, and hence can suppress fluctuations in physical property values during the storage of the stretchable material of the present invention.

When the olefin-based elastomer is adopted as the elastomer resin, the process in the production of the elastomer layer can be simplified, and hence its processing cost can be reduced. This is because of, for example, the following reason: when the olefin-based elastomer is adopted as the elastomer resin, extrusion molding can be performed while the number of kinds of resins to be used in the production of the elastomer layer is reduced, and hence the need for the production of a master batch can be eliminated.

In the present invention, when the olefin-based elastomer is adopted as the elastomer resin, only one kind of the olefin-based elastomers may be used, or a blend of two or more kinds thereof may be used.

Examples of the olefin-based elastomer include an olefin block copolymer, an olefin random copolymer, an ethylene copolymer, a propylene copolymer, an ethylene olefin block copolymer, a propylene olefin block copolymer, an ethylene olefin random copolymer, a propylene olefin random copolymer, an ethylene propylene random copolymer, an ethylene (1-butene) random copolymer, an ethylene (1-pentene) olefin block copolymer, an ethylene (1-hexene) random copolymer, an ethylene (1-heptene) olefin block copolymer, an ethylene (1-octene) olefin block copolymer, an ethylene (1-nonene) olefin block copolymer, an ethylene (1-decene) olefin block copolymer, a propylene ethylene olefin block copolymer, an ethylene (α-olefin) copolymer, an ethylene (α-olefin) random copolymer, an ethylene (α-olefin) block copolymer, and combinations thereof.

In the present invention, the olefin-based elastomer that may be adopted as the elastomer resin has a density of preferably from 0. 890 g/cm³ to 0.830 g/cm³, more preferably from 0.888 g/cm³ to 0.835 g/cm³, still more preferably from 0.886 g/cm³ to 0.835 g/cm³, particularly preferably from 0.885 g/cm³ to 0.840 g/cm³, most preferably from 0.885 g/cm³ to 0.845 g/cm³. When the olefin-based elastomer whose density falls within the range is adopted, a stretchable material having more excellent fittability can be provided, and the thermal stability is further improved, and hence, for example, the heat deterioration at the time of film formation in theproductionof the stretchablematerial of the present invention can be further suppressed. In addition, the storage stability is further improved, and hence the fluctuations in physical property values during the storage of the stretchable material of the present invention can be further suppressed. Further, the process in the production of the elastomer layer can be further simplified, and hence its processing cost can be further reduced.

In the present invention, the olefin-based elastomer that may be adopted as the elastomer resin has a MFR of preferably from 5.0 g/10 min to 25.0 g/10 min, more preferably from 5.0 g/10 min to 23.0 g/10 min, still more preferably from 5.0 g/10 min to 21.0 g/10 min, particularly preferably from 5.0 g/10 min to 20.0 g/10 min, most preferably from 5.0 g/10 min to 19.0 g/10 min. When the olefin-based elastomer whose MFR falls within the range is adopted, a stretchable material having more excellent fittability can be provided, and the thermal stability is further improved, and hence, for example, the heat deterioration at the time of film formation in the production of the stretchable material of the present invention can be further suppressed. In addition, the storage stability is further improved, and hence the fluctuations in physical property values during the storage of the stretchable material of the present invention can be further suppressed. Further, the process in the production of the elastomer layer can be further simplified, and hence its processing cost can be further reduced.

In the present invention, the olefin-based elastomer that may be adopted as the elastomer resin is specifically preferably an α-olefin-based elastomer. That is, the α-olefin-based elastomer is a copolymer of two or more kinds of α-olefins and has elastomeric characteristics. Among such α-olefin-based elastomers, any one selected from an ethylene-based elastomer, a propylene-based elastomer, and a 1-butene-based elastomer is more preferred. When such α-olefin-based elastomer is adopted as the olefin-based elastomer, a stretchable material having more excellent fittability can be provided, and the thermal stability is further improved, and hence, for example, the heat deterioration at the time of film formation in the production of the stretchable material of the present invention can be further suppressed. In addition, the storage stability is further improved, and hence the fluctuations inphysical property values during the storage of the stretchable material of the present invention can be further suppressed. Further, the process in the production of the elastomer layer can be further simplified, and hence its processing cost can be further reduced.

In the present invention, among the α-olefin-based elastomers that may be adopted as the elastomer resin, a propylene-based elastomer is particularly preferred. When the propylene-based elastomer is adopted as the olefin-based elastomer, a stretchable material having extremely excellent fittability can be provided, and the thermal stability is further improved, and hence, for example, the heat deterioration at the time of film formation in the production of the stretchable material of the present invention can be further suppressed. In addition, the storage stability is further improved, and hence the fluctuations in physical property values during the storage of the stretchable material of the present invention can be further suppressed. Further, the process in the production of the elastomer layer can be further simplified, and hence its processing cost can be further reduced.

The α-olefin-based elastomer as described above is also available as a commercial product. Examples of such commercial product include some products in the "TAFMER" (trademark) series (such as TAFMER PN-3560) manufactured by Mitsui Chemicals, Inc., and some products in the "Vistamaxx" (trademark) series (such as Vistamaxx 6202, Vistamaxx 3980FL, and Vistamaxx 7000 series) manufactured by Exxon Mobil Corporation.

In the present invention, the α-olefin-based elastomer that may be adopted as the elastomer resin is preferably produced by using a metallocene catalyst. In the α-olefin-based elastomer produced by using a metallocene catalyst, a stretchable material having extremely excellent fittability can be provided, and the thermal stability is further improved, and hence, for example, the heat deterioration at the time of film formation in the production of the stretchable material of the present invention can be further suppressed. In addition, the storage stability is further improved, and hence the fluctuations in physical property values during the storage of the stretchable material of the present invention can be further suppressed. Further, the process in the production of the elastomer layer can be further simplified, and hence its processing cost can be further reduced.

The adoption of the styrene-based elastomer as the elastomer resin improves the thermal stability, and hence, for example, the adoption can suppress the heat deterioration at the time of the film formation in the production of the stretchable material of the present invention. In addition, the adoption of the styrene-based elastomer as the elastomer resin improves the storage stability, and hence can suppress the fluctuations in physical property values during the storage of the stretchable material of the present invention.

The adoption of the styrene-based elastomer as the elastomer resin can simplify the process in the production of the elastomer layer, and hence can reduce its processing cost. This is because of, for example, the following reason: when the styrene-based elastomer is adopted as the elastomer resin, extrusion molding can be performed while the number of kinds of the resins to be used in the production of the elastomer layer is reduced, and hence the need for the production of a master batch can be eliminated.

In the present invention, when the styrene-based elastomer is adopted as the elastomer resin, only one kind of the olefin-based elastomers may be used, or a blend of two or more kinds thereof may be used.

Examples of the styrene-based elastomer include: an A-B type diblock polymer, such as a styrene-butadiene copolymer (SB), a styrene-isoprene copolymer (SI), a styrene-ethylene-butylene copolymer (SEB), or a styrene-ethylene-propylene copolymer (SEP); a multiblock polymer of an A-B-A type triblock, an A-B-A-B type tetrablock, or a higher block, such as a styrene-butadiene-styrene copolymer (SBS), a styrene-isoprene-styrene copolymer (SIS), a styrene-ethylene-butylene copolymer-styrene copolymer (SEBS), or a styrene-ethylene-propylene copolymer-styrene (SEPS); a styrene-based random copolymer, such as a styrene-butadiene rubber copolymer (SBR); an A-B-C type styrene-olefin crystal-based block polymer, such as a styrene-ethylene-butylene copolymer-olefin crystal (SEBC); and elastomers having the molecular structures of these copolymers and the like.

In the present invention, the styrene-based elastomer that may be adopted as the elastomer resin is preferably a SIS-based elastomer having a specific molecular structure.

Specifically, such SIS-based elastomer having a specific molecular structure is preferably a SIS-based elastomer including such a styrene-isoprene-styrene block copolymer molecular structure that the chain lengths of styrene blocks at its terminals differ from each other (hereinafter sometimes referred to as "specific SIS-based elastomer"), and is distinguished from a conventional SIS-based elastomer. In the present invention, the adoption of the specific SIS-based elastomer as the elastomer resin serving as the main component in the elastomer layer can provide a stretchable material including a nonwoven fabric layer on at least one side of the elastomer layer containing the styrene-based elastomer as the main component, the material being improved in strength, stiffness, and stretching property to have excellent fittability, and having excellent elastic recoverability after its stretching.

The specific SIS-based elastomer is, for example, a product available under the trade name "Quintac 3390 (SL-159)" from Zeon Corporation (styrene content=48 wt%).

In the present invention, when the specific SIS-based elastomer is adopted as the elastomer resin serving as the main component in the elastomer layer, a styrene content in the specific SIS-based elastomer serving as the main component in the elastomer layer is preferably more than 3 0 wt%, more preferably from 60 wt% to 3 0 wt%, still more preferably from 55 wt% to 30 wt%, still further more preferably from 55 wt% to 35 wt%, particularly preferably from 50 wt% to 35 wt%, most preferably from 50 wt% to 40 wt%. When the styrene content in the specific SIS-based elastomer serving as the main component in the elastomer layer falls within the range, there can be provided a stretchable material including a nonwoven fabric layer on at least one side of the elastomer layer containing the styrene-based elastomer as the main component, the material being further improved in strength, stiffness, and stretching property to have more excellent f ittability, andhavingmore excellent elastic recoverability after its stretching.

In addition, in the present invention, the adoption of the specific SIS-based elastomer as the elastomer resin serving as the main component in the elastomer layer can simplify the process in the production of the elastomer layer, and hence can reduce its processing cost. This is because of, for example, the following reason. When any other elastomer resin (such as any other styrene-based elastomer) is adopted as the elastomer resin, several kinds of styrene-based elastomers need to be blended for controlling the physical property values of the stretchable material, and a master batch need to be produced for the purpose. When the specific SIS-based elastomer is adopted as the elastomer resin, extrusion molding can be performed while the number of kinds of the resins to be used in the production of the elastomer layer is reduced, and hence the need for the production of the master batch can be eliminated.

In the present invention, when the specific SIS-based elastomer is adopted as the elastomer resin serving as the main component in the elastomer layer, only one kind of the specific SIS-based elastomers may be used, or a blend of two or more kinds thereof may be used.

In the present invention, when the specific SIS-based elastomer is adopted as the elastomer resin serving as the main component in the elastomer layer, the density of the specific SIS-based elastomer is preferably from 0.940 g/cm³ to 0.850 g/cm³, more preferably from 0.935 g/cm³ to 0.860 g/cm³, still more preferably from 0.930 g/cm³ to 0.865 g/cm³, particularly preferably from 0.925 g/cm³ to 0. 870 g/cm³, most preferably from 0. 920 g/cm³ to 0.875 g/cm³. The adoption of the specific SIS-based elastomer whose density falls within the range enables the provision of a stretchable material including a nonwoven fabric layer on at least one side of the elastomer layer containing the styrene-based elastomer as the main component, the material being further improved in strength, stiffness, and stretching property to have more excellent fittability, and having more excellent elastic recoverability after its stretching. In addition, the adoption can further simplify the process in the production of the elastomer layer, and hence can further reduce its processing cost.

In the present invention, when the specific SIS-basedelastomer is adopted as the elastomer resin serving as the main component in the elastomer layer, the MFR of the specific SIS-based elastomer is preferably from 5.0 g/10 min to 25.0 g/10 min, more preferably from 5.0 g/10 min to 23.0 g/10 min, still more preferably from 5.0 g/10 min to 21 g/10 min, particularly preferably from 6.0 g/10 min to 20.0 g/10 min, most preferably from 8.0 g/10 min to 18.0 g/10 min. The adoption of the specific SIS-based elastomer whose MFR falls within the range enables the provision of a stretchablematerial including a nonwoven fabric layer on at least one side of the elastomer layer containing the styrene-based elastomer as the main component, the material being further improved in strength, stiffness, and stretching property to have more excellent fittability, and having more excellent elastic recoverability after its stretching. In addition, the adoption can further simplify the process in the production of the elastomer layer, and hence can further reduce its processing cost.

The elastomer layer may contain any appropriate other component to the extent that the effects of the present invention are not impaired. Examples of such other component include any other polymer, a tackifier, a plasticizer, an antidegradant, a pigment, a dye, an antioxidant, an antistatic agent, a lubricant, a blowing agent, a heat stabilizer, a light stabilizer, an inorganic filler, and an organic filler. The number of kinds of those components may be only one, or may be two or more. The content of the other component in the elastomer layer is preferably 10 wt% or less, more preferably 7 wt% or less, still more preferably 5 wt% or less, particularly preferably 2 wt% or less, most preferably 1 wt% or less.

The thickness of the elastomer layer is preferably from 200 µm to 20 µm, more preferably from 160 µm to 30 µm, still more preferably from 140 µm to 30 µm, particularly preferably from 120 µm to 30 µm, most preferably from 100 µm to 30 µm. When the thickness of the elastomer layer falls within such range, a stretchable laminate having more excellent fittability can be provided. It should be noted that the thickness of the elastomer layer may partially become from about 2 µm to about 3 µm depending on the state of the stretchable material because when the layer is strongly subjected to lamination processing together with the nonwoven fabric layer by heat or a pressure, the elastomer layer is expanded by the action of the heat or the pressure and hence its thickness reduces.

In the present invention, when the elastomer layer is of a multilayer structure formed of two or more layers, all of the layers may be layers of the same kind, or at least two of the layers may be layers of different kinds.

### «Nonwoven Fabric Layer»

Any appropriate nonwoven fabric layer may be adopted as the nonwoven fabric layer to the extent that the effects of the present invention are not impaired. The number of kinds of nonwoven fabrics constituting the nonwoven fabric layer may be only one, or may be two or more.

Examples of the nonwoven fabric constituting the nonwoven fabric layer include a spunbond nonwoven web, a raised nonwoven fabric (such as a nonwoven fabric obtained by a thermal bonding method, a bonding joining method, or a spunlace method), a melt-blown nonwoven web, a spunlace nonwoven web, a spunbondmelt-blown spunbond nonwoven web, a spunbond melt-blown melt-blown spunbond nonwoven web, an unjoined nonwoven web, an electrospun nonwoven web, a flashspun nonwoven web (such as TYVEKTM of DuPont), and a carded nonwoven fabric.

The nonwoven fabric constituting the nonwoven fabric layer may containpolyolefin fibers, such as polypropylene, polyethylene, polyester, polyamide, polyurethane, an elastomer, rayon, cellulose, acryl, copolymers thereof, blends thereof, or mixtures thereof.

The nonwoven fabric constituting the nonwoven fabric layer may contain a fiber which has a uniform structure and may contain a two-component structure, such as a sheath/core structure, a side-by-side structure, a sea-island structure, or any other two-component structure. Detailed descriptions of the nonwoven fabric can be found in, for example, "Nonwoven Fabric Primer and Reference Sampler, " E.A. Vaughn, Association of the Nonwoven Fabrics Industry, third edition (1992).

The basis weight of the nonwoven fabric constituting the nonwoven fabric layer is preferably 150 gsm or less, more preferably 100 gsm or less, still more preferably 70 gsm or less, particularly preferably from 10 gsm to 50 gsm.

### <<Production of Stretchable Material of the Present Invention>>

In the production of the stretchable material of the present invention, when the elastomer layer and the nonwoven fabric layer are directly laminated with each other (for example, in the cases of FIG. 1 and FIG. **2**), the elastomer layer and the nonwoven fabric layer need to be bonded to each other. Examples of such bonding method include: (1) a method involving laminating an elastomer layer formed by any of various application methods or the like and a nonwoven fabric layer separately fed from a rolled body; (2) a method involving laminating an elastomer layer and a nonwoven fabric layer by co-extrusion; (3) a method involving bonding an elastomer layer and a nonwoven fabric layer, which are prepared separately, with an adhesive; (4) a method involving forming a nonwoven fabric layer on an elastomer layer formed by any of various application methods or the like through a melt-blown method or the like; and (5) thermally laminating or ultrasonically welding an elastomer layer and a nonwoven fabric layer.

The bonding of the elastomer layer and the nonwoven fabric layer may be conducted with a hot-melt pressure-sensitive adhesive. When the hot-melt pressure-sensitive adhesive is used, the need to add a tackifier as a component of the elastomer layer is reduced, and hence, for example, the extrusion stability is improved, a problem in that the tackifier adheres to a molding roll can be suppressed, and a contamination problem of the production line by volatile matter contamination or the like caused by the tackifier can be suppressed.

When the hot-melt pressure-sensitive adhesive is used in bonding the elastomer layer and the nonwoven fabric layer, in the case of applying the method (1) described above, the nonwoven fabric layer separately fed from a rolled body may be coated with the hot-melt pressure-sensitive adhesive before being laminated with the elastomer layer.

When the hot-melt pressure-sensitive adhesive is used in the bonding of the elastomer layer and the nonwoven fabric layer, there is no need to coat an entire surface on the nonwoven fabric layer with the hot-melt pressure-sensitive adhesive, and the pressure-sensitive adhesive needs only to be applied partially (e. g. , in a dot manner) in accordance with, for example, the shape of the elastomer layer.

The stretchable material of the present invention can be subjected to treatments referred to as a pre-stretching treatment and an activation treatment after laminating the elastomer layer and the nonwoven fabric layer. Specifically, a stretching treatment is performed in a width direction of the stretchable material or a treatment in which a fiber structure of a part of the region of the nonwoven fabric layer is mechanically broken can be performed. When such treatments are performed, the stretchable material can be elongated by a smaller force.

### «Application of Stretchable Material of the Present Invention»

The stretchable material of the present invention can be used in any appropriate article in which the effects of the present invention can be effectively utilized. That is, the article of the present invention includes the stretchable material of the present invention. A typical example of such article is a sanitary material. Examples of such sanitary material include: various medical materials that may be used in a medical field while being in contact with a body, such as a diaper (especially, for example, the ear portion, waist portion, or leg gather portion of a disposable diaper), a supporter, a mask, a packaging material for a thermal body warmer, a packaging material for a cooling material, and a medical operating gown; and sports-related medical applications where stretchability is required.

### Examples

The present invention is hereinafter specifically described by way of Examples. However, the present invention is by no means limited by these Examples. It should be noted that, in Examples and the like, test and evaluation methods are as described below. In addition, "part(s)" means "part (s) by weight" and "%" means "wt%" unless otherwise stated.

### (Measurement of Density)

The density (g/cm³) of a resin was a value measured in conformity to JIS K7112.

### (Measurement of MFR)

A MFR (g/10 min) was a value measured in conformity to JIS K7210.

### (Strength at Time of Elongation by 100%)

A stretchable material was cut into a size of 30 mm in width and 100 mm in length so that an elongation direction was a long side.

The resultant stretchable material was set on a tension testing machine (manufactured by Shimadzu Corporation: AG-IS 50 kN) so as to have a distance between chucks of 50 mm with a rubber plate and was subjected to a pre-stretching step at a tension speed of 300 mm/min and a moving distance of 50 mm (elongation by 100%) (The distance between the chucks was returned by 50 mm immediately after the movement of the chucks by 50 mm. At this time, the stretchable material was in a state in which sag corresponding to the permanent set occurred.).

Subsequently, the distance between the chucks was extended little by little under the same measurement conditions to move the chucks to a point at which a stress was able to be detected in a load cell (point at which the stress reached 0.1 N/30 mm), to thereby control the sag corresponding to the permanent set.

The point of 0.1 N/30 mm was defined as point zero, an elongation test was performed again at a moving distance of 50 mm, and the strength at the time of elongation by 100% was measured.

### (Evaluation for Rash Property)

The waist gather of a diaper was produced by using each of the stretchable materials obtained in Examples and Comparative Examples, and was processed into an actual diaper. Ten babies serving as subjects were each fitted with the diaper, and an evaluation for a rash property was performed.
- ○:: No rash was observed in all the ten babies.
- ×:: A rash was observed in one or more of the ten babies.

### [Example 1]

100 Parts by weight of a styrene-based resin (manufactured by Zeon Corporation, trade name: Quintac 3390, styrene content=48 wt%, MFR=15.0 g/10 min) was mixed with 50 parts by weight of a paraffin-based process oil (manufactured by Idemitsu Kosan Co., Ltd., tradename: PW-90), and the viscosity of the mixture was adjusted to 38, 500 cps (200°C). The mixture was appliedonto a silicone-based separator with a spray-type applying apparatus (curtain spray-type hot-melt applying apparatus) at 200°C in a fibrous manner (application amount: 100 g/cm², fiber diameter: from 10 µm to 30 µm) to form a fiber assembly-like elastomer layer on the silicone-based separator. The resultant fiber assembly-like elastomer layer had an air-permeable portion, and the length of the largest portion of the air-permeable portion was from 1 mm to 3 mm.

The silicone-based separator was removed from the resultant fiber assembly-like elastomer layer, and a PP-based nonwoven fabric (PP carded type, basis weight: 24 gsm) was bonded to each of both surfaces of the fiber assembly-like elastomer layer with a SIS-based hot-melt pressure-sensitive adhesive applied in a stripe manner. Thus, a laminated sheet was produced.

The resultant laminated sheet was partially stretched (subjected to an activation treatment) in a CD direction to provide a stretchable laminate (1) serving as a stretchable material.

The results of the evaluations of the resultant stretchable laminate (1) were shown in Table 1.

### [Example 2]

First, 100 parts by weight of an olefin-based resin (manufactured by Exxon Mobil Corporation, trade name: Vistamaxx 6202, density=0.861 g/cm³, MFR=18.0 g/10 min) was intermittently applied onto a silicone-based separator with an intermittent applying apparatus (intermittent application-type hot-melt applying apparatus) in a CD direction at 200°C (application thickness: 80 µm, application width: 2 mm, application interval: 10 mm). Subsequently, 100 parts by weight of an olefin-based resin (manufactured by Exxon Mobil Corporation, trade name: Vistamaxx 6202, density=0.861 g/cm³, MFR=18.0 g/10 min) was applied with a streaky applying apparatus (streaky application-type hot-melt applying apparatus) in a MD direction at 200°C (application thickness: 80 µm, application width: 2 mm, application interval: 10 mm). Thus, a network elastomer layer was formed on the silicone-based separator. The resultant network elastomer layer had a network air-permeable portion, and the air-permeable portion had a size of 10 mm square.

The silicone-based separator was removed from the resultant network elastomer layer, and a PP-based nonwoven fabric (PP carded type, basis weight: 24 gsm) was bonded to each of both surfaces of the network elastomer layer with a SIS-based hot-melt pressure-sensitive adhesive applied in a stripe manner. Thus, a laminated sheet was produced.

The resultant laminated sheet was partially stretched (subj ected to an activation treatment) in the CD direction to provide a stretchable laminate (2) serving as a stretchable material.

The results of the evaluations of the resultant stretchable laminate (2) were shown in Table 1.

### [Example 3]

First, 100 parts by weight of an olefin-based resin (manufactured by Exxon Mobil Corporation, trade name: Vistamaxx 6202, density=0.861 g/cm³, MFR=18.0 g/10 min) was intermittently applied onto a silicone-based separator with an intermittent applying apparatus (intermittent application-type hot-melt applying apparatus) in a CD direction at 200°C (application thickness: 80 µm, application width: 2 mm, application interval: 5 mm).. Subsequently, 100 parts by weight of an olefin-based resin (manufactured by Mitsui Chemicals, Inc., trade name:TAFMER PN-3560, density=0.866 g/cm³, MFR=6.0 g/10 min) was applied with a streaky applying apparatus (streaky application-type hot-melt applying apparatus) in a MD direction at 200°C (application thickness: 60 µm, application width: 2 mm, application interval: 5 mm). Thus, a network elastomer layer was formed on the silicone-based separator. The resultant network elastomer layer had a network air-permeable portion, and the air-permeable portion had a size of 5 mm square.

The silicone-based separator was removed from the resultant network elastomer layer, and a PP-based nonwoven fabric (PP carded type, basis weight: 24 gsm) was bonded to each of both surfaces of the network elastomer layer with an olefin-based hot-melt pressure-sensitive adhesive applied in a stripe manner. Thus, a laminated sheet was produced.

The resultant laminated sheet was partially stretched (subjected to an activation treatment) in the CD direction and the MD direction to provide a stretchable laminate (3) serving as a stretchable material.

The results of the evaluations of the resultant stretchable laminate (3) were shown in Table 1.

### [Example 4]

An olef in-based resin (manufactured by Mitsui Chemicals, Inc., trade name: TAFMER PN-3560, density=0.866 g/cm³, MFR=6.0 g/10 min) was intermittently applied onto a PP-basednonwoven fabric (PP carded type, basis weight: 24 gsm) with an intermittent applying apparatus (intermittent application-type hot-melt applying apparatus) in a CD direction at 200°C (application thickness: 100 µm, application width: 5 mm, application interval: 3 mm) to form a stripe-like elastomer layer on the PP-based nonwoven fabric. The resultant stripe-like elastomer layer had an air-permeable portion (interval: 3 mm) between adjacent stripes.

A PP-based nonwoven fabric (PP carded type, basis weight: 24 gsm) was bonded to the surface of the resultant stripe-like elastomer layer having the nonwoven fabric on one side thereof with a styrene-based hot-melt pressure-sensitive adhesive applied in a stripe manner. Thus, a laminated sheet was produced.

The resultant laminated sheet was partially stretched (subj ected to an activation treatment) in the CD direction to provide a stretchable laminate (4) serving as a stretchable material.

The results of the evaluations of the resultant stretchable laminate (4) were shown in Table 1.

### [Example 5]

An olef in-based resin (manufactured by Mitsui Chemicals, Inc., trade name: TAFMER PN-3560, density=0.866 g/cm³, MFR=6.0 g/10 min) was applied onto a PP-based nonwoven fabric (PP carded type, basis weight: 24 gsm) with a streaky applying apparatus (streaky application-type hot-melt applying apparatus) in a MD direction at 200°C (application thickness: 100 µm, application width: 5 mm, application interval: 3 mm), and at the same time, a PP-based nonwoven fabric (PP carded type, basis weight: 24 gsm) was bonded onto the other side. The resultant stripe-like elastomer layer had an air-permeable portion (interval: 3 mm) between adjacent stripes.

The resultant laminated sheet was partially stretched (subj ected to an activation treatment) in the MD direction to provide a stretchable laminate (5) serving as a stretchable material.

The results of the evaluations of the resultant stretchable laminate (5) were shown in Table 1.

### [Example 6]

An olefin-based resin (manufactured by Mitsui Chemicals, Inc. , trade name: TAFMER PN-3560, density=0.866 g/cm³, MFR=6.0 g/10 min) was applied in a honeycomb manner onto a silicone-based separator with an applying apparatus capable of applying a design in a pattern (hot-melt applying apparatus) at 200°C (application thickness: 100 µm) to form an elastomer layer formed of a continuous pattern of the design on the silicone-based separator. The resultant elastomer layer formed of the continuous pattern of the design had an air-permeable portion, and the length of the largest portion of the air-permeable portion was from 10 mm to 12 mm.

The silicone-based separator was removed from the resultant elastomer layer formed of the continuous pattern of the design, and a PP-based nonwoven fabric (PP carded type, basis weight: 24 gsm) was bonded to each of both surfaces of the elastomer layer formed of the continuous pattern of the design with a heat roll (100°C). Thus, a laminated sheet was produced.

The resultant laminated sheet was partially stretched (subjected to an activation treatment) in a CD direction to provide a stretchable laminate (6) serving as a stretchable material.

The results of the evaluations of the resultant stretchable laminate (6) were shown in Table 1.

### [Comparative Example 1]

A styrene-based resin (manufactured by Zeon Corporation, trade name: Quintac 3390, styrene content=48 wt%, MFR=15.0 g/10 min) was loaded into an extruder with a T-die and extruded to produce an elastomer layer having a thickness of 40 µm.

A PP-based nonwoven fabric (PP carded type, basis weight: 24 gsm) was bonded to each of both surfaces of the resultant elastomer layer with a styrene-based hot-melt pressure-sensitive adhesive applied in a stripe manner. Thus, a laminated sheet was produced.

The resultant laminated sheet was partially stretched (subjected to an activation treatment) in a CD direction to provide a stretchable laminate (C1) serving as a stretchable material.

The results of the evaluations of the resultant stretchable laminate (C1) were shown in Table 1.

### [Comparative Example 2]

An olef in-based resin (manufactured by Exxon Mobil Corporation, trade name: Vistamaxx 6202, density=0.861 g/cm³, MFR=18. 0 g/10 min) was loaded into an extruder with a T-die and extruded to produce an elastomer layer having a thickness of 30 µm.

A PP-based nonwoven fabric (PP carded type, basis weight: 24 gsm) was bonded to each of both surfaces of the resultant elastomer layer with a styrene-based hot-melt pressure-sensitive adhesive applied in a stripe manner. Thus, a laminated sheet was produced.

The resultant laminated sheet was partially stretched (subjected to an activation treatment) in a CD direction to provide a stretchable laminate (C2) serving as a stretchable material.

The results of the evaluations of the resultant stretchable laminate (C2) were shown in Table 1.

### [Comparative Example 3]

An olefin-based resin (manufactured by Mitsui Chemicals, Inc., trade name: TAFMER PN-3560, density=0.866 g/cm³, MFR=6.0 g/10 min) was loaded into an extruder with a T-die and extruded to produce an elastomer layer having a thickness of 60 µm.

A PP-based nonwoven fabric (PP carded type, basis weight: 24 gsm) was bonded to each of both surfaces of the resultant elastomer layer with an olefin-based hot-melt pressure-sensitive adhesive applied in a stripe manner. Thus, a laminated sheet was produced.

The resultant laminated sheet was partially stretched (subjected to an activation treatment) in a CD direction to provide a stretchable laminate (C3) serving as a stretchable material.

The results of the evaluations of the resultant stretchable laminate (C3) were shown in Table 1.

**[Table 1]**

| | Example 1 | Example 2 | Example 3 | Example 4 | Example 5 | Example 6 | Comparati ve Example 1 | Comparati ve Example 2 | Comparati ve Example 3 |
|---|---|---|---|---|---|---|---|---|---|
| Stretchable laminate | (1) | (2) | (3) | (4) | (5) | (6) | (C1) | (C2) | (C3) |
| Elastomer layer | Fiber assembly-like | Network | Network Different kinds in longitudinal and lateral directions | CD direction Stripe-like | MD direction Stripe-like | Formed of continuous pattern of design | T-die extruded film | T-die extruded film | T-die extruded film |
| Strength at the time of elongation by 100% (N/30 mm) | CD direction 9.2 | CD direction 8.1 | CD direction 10.0 MD direction 4.5 | CD direction 10.0 | MD direction 10.0 | CD direction 11.0 | CD direction 11.1 | CD direction 7.0 | CD direction 14.8 |
| Evaluation for rash property | ○ | ○ | ○ | ○ | ○ | ○ | × | × | × |

### [Example 7]

100 Parts by weight of a styrene-based resin (manufactured by Zeon Corporation, trade name: Quintac 3390, styrene content=48 wt%, MFR=15.0 g/10 min) was mixed with 50 parts by weight of a paraffin-based process oil (manufactured by Idemitsu Kosan Co., Ltd., tradename: PW-90), and the viscosity of the mixture was adjusted to 38, 500 cps (200°C). Themixturewas applied onto a silicone-based separator with a spray-type applying apparatus (curtain spray-type hot-melt applying apparatus) at 200°C in a fibrous manner (application amount: 100 g/cm², fiber diameter: from 10 µm to 30 µm) to form a fiber assembly-like elastomer layer (elastomer layer having an air-permeable portion) on the silicone-based separator. The resultant fiber assembly-like elastomer layer (7) serving as a stretchable material had an air-permeable portion, and the length of the largest portion of the air-permeable portion was from 1 mm to 3 mm.

The results of the evaluations of the resultant fiber assembly-like elastomer layer (7) were shown in Table 2.

### [Example 8]

First, 100 parts by weight of an olefin-based resin (manufactured by Exxon Mobil Corporation, trade name: Vistamaxx 6202, density=0.861 g/cm³, MFR=18.0 g/10 min) was intermittently applied onto a silicone-based separator with an intermittent applying apparatus (intermittent application-type hot-melt applying apparatus) in a CD direction at 200°C (application thickness: 80 µm, application width: 2 mm, application interval: 10 mm). Subsequently, 100 parts by weight of an olefin-based resin (manufactured by Exxon Mobil Corporation, trade name: Vistamaxx 6202, density=0.861 g/cm³, MFR=18.0 g/10 min) was applied with a streaky applying apparatus (streaky application-type hot-melt applying apparatus) in a MD direction at 200°C (application thickness: 80 µm, application width: 2 mm, application interval: 10 mm). Thus, a network elastomer layer (elastomer layer having an air-permeable portion) was formed on the silicone-based separator. The resultant network elastomer layer (8) serving as a stretchable material had a network air-permeable portion, and the air-permeable portion had a size of 10 mm square.

The results of the evaluations of the resultant network elastomer layer (8) were shown in Table 2.

### [Example 9]

First, 100 parts by weight of an olefin-based resin (manufactured by Exxon Mobil Corporation, trade name: Vistamaxx 6202, density=0.861 g/cm³, MFR=18.0 g/10 min) was intermittently applied onto a silicone-based separator with an intermittent applying apparatus (intermittent application-type hot-melt applying apparatus) in a CD direction at 200°C (application thickness: 80 µm, application width: 2 mm, application interval: 5 mm). Subsequently, 100 parts by weight of an olefin-based resin (manufactured by Mitsui Chemicals, Inc., trade name: TAFMER PN-3560, density=0.866 g/cm³, MFR=6.0 g/10 min) was applied with a streaky applying apparatus (streaky application-type hot-melt applying apparatus) in a MD direction at 200°C (application thickness: 60 µm, application width: 2 mm, application interval: 5 mm). Thus, a network elastomer layer (elastomer layer having an air-permeable portion) was formed on the silicone-based separator. The resultant network elastomer layer (9) serving as a stretchable material had a network air-permeable portion, and the air-permeable portion had a size of 5 mm square.

The results of the evaluations of the resultant network elastomer layer (9) were shown in Table 2.

### [Example 10]

An olefin-based resin (manufactured by Mitsui Chemicals, Inc. , trade name: TAFMER PN-3560, density=0.866 g/cm³, MFR=6.0 g/10 min) was applied in a honeycomb manner onto a silicone-based separator with an applying apparatus capable of applying a design in a pattern (hot-melt applying apparatus) at 200°C (application thickness: 100 µm) to form an elastomer layer formed of a continuous pattern of the design (elastomer layer having an air-permeable portion) on the silicone-based separator. The resultant elastomer layer (10) formed of the continuous pattern of the design serving as a stretchable material had an air-permeable portion, and the length of the largest portion of the air-permeable portion was from 10 mm to 12 mm.

The results of the evaluations of the resultant elastomer layer (10) formed of the continuous pattern of the design were shown in Table 2.

**[Table 2]**

| | Example 7 | Example 8 | Example 9 | Example 10 |
|---|---|---|---|---|
| Stretchable material | (7) | (8) | (9) | (10) |
| Elastomer layer | Fiber assembly-like | Network | Network Different kinds in longitudinal and lateral directions | Formed of continuous pattern of design |
| Strength at the time of elongation by 100% (N/30 mm) | CD direction 8.0 | CD direction 7.5 | CD direction 9.2 | CD direction 10.1 |
| Evaluation for rash property | ○ | ○ | ○ | ○ |

As shown in Tables 1 and 2, it is found that the stretchable material of the present invention has excellent stretchability and satisfactory air permeability, and hence can suppress a rash problem when the material is applied to an article, e.g., a sanitary material, such as a diaper or a mask. It is also found that the elastomer layer of the stretchable material of the present invention has an air-permeable portion that is not a hole formed by piercing, and hence the occurrence of the protrusion of the elastomer layer and a burr thereof can be reduced, and a problem in that a skin is damaged when the material is applied to an article, e. g. , a sanitary material, such as a diaper or a mask, can be suppressed. It is also found that the elastomer layer of the stretchable material of the present invention has the air-permeable portion that is not a hole formed by the piercing, and hence a problem in that a total production cost for the stretchable laminate increases owing to an increase in cost and a reduction in yield due to the piercing can be suppressed.

### Industrial Applicability

The stretchable material of the present invention may be used in any appropriate article in which the effects of the present invention can be effectively utilized. That is, the article of the present invention includes the stretchable material of the present invention. A typical example of such article is a sanitary material. Examples of such sanitary material include a diaper (particularly, an ear portion of a disposal diaper), a supporter, and a mask.

### Reference Signs List

- **100**: stretchable material
- **10**: elastomer layer
- **20**: nonwoven fabric layer
- **20a**: nonwoven fabric layer
- **20b**: nonwoven fabric layer

## Claims

1. A stretchable material, comprising an elastomer layer having an air-permeable portion.

2. The stretchable material according to claim 1, further comprising a nonwoven fabric layer on at least one side of the elastomer layer.

3. The stretchable material according to claim 1 or 2, wherein theair-permeableportionis free f rombeingahole formed by piercing.

4. The stretchable material according to any one of claims 1 to 3, wherein the elastomer layer comprises at least one kind selected from a fiber assembly-like elastomer layer, a network elastomer layer, a stripe-like elastomer layer, and an elastomer layer formed of a continuous pattern of a letter or a design.

5. The stretchable material according to any one of claims 1 to 4, wherein the elastomer layer is formed by at least one kind of application selected from fibrous application, intermittent application, pattern-type application, and streaky application.

6. The stretchable material according to any one of claims 1 to 5, wherein the elastomer layer contains at least one kind selected from an olefin-based elastomer and a styrene-based elastomer.

7. An article, comprising the stretchable material of any one of claims 1 to 6.
